# EUROPEAN PATENT APPLICATION

(11) **EP 4 682 053 A1**
(43) Date of publication of application: **21.01.2026**
(21) Application number: 24461599.3
(22) Date of filing: 19.07.2024
(51) Int. Cl.: B64D 11/06, B60N 2/75, B61D 33/00

(54) **ARMREST**

(71) Applicant: B/E Aerospace Fischer GmbH, 84034 Landshut (DE)
(72) Inventor: KOLODZIEJCZAK, Marcin Szymon, 51-317 Wroclaw (PL); KALISZCZYK, Piotr Krzysztof, 51-317 Wroclaw (PL); CHODYNIECKI, Marcin Adam, 51-317 Wroc aw (PL)
(74) Representative: Dehns

(57) **Abstract**

An armrest comprising: an internal structural frame formed of sheet metal parts (10, 20) bent or folded to define an outer shape of the frame and that define spaces therebetween; a shell (70, 80) provided over the structural frame and comprising a first shell half (70) fitted over a first side of the structural frame and a second shell half (80) fitted over an opposite side of the structural frame, the first and second shell halves overlapping at an inner portion (72) where they meet; a cushion part (90, 100) comprising a cushion mounting frame (220) and a cushion (200) mounted thereon, the cushion frame mounted to the shell; and two or more fasteners (301, 302, 303) each of which extends through the structural frame, the shell and the cushion mounting frame.

## Description

### TECHNICAL FIELD

The present disclosure relates to an armrest for a seat e.g. (but not exclusively) for a seat in an aircraft such as an airplane or helicopter or in a vehicle.

### BACKGROUND

Many seats are provided with an armrest on which a person seated in the seat can rest their arm. Often, the armrests are moveable between an open (deployed) and a closed (stowed) position to allow the armrest to be folded away if not needed or to provide more space or access to/from the seat. Such armrests are, for example, common in aircraft, including airplanes and helicopters, and vehicles. Typically, such armrests are pivotable about an axis from the stowed position where the armrest is in or close to the plane of the backrest of the seat, to the open position extending from the back of the seat to a position in which a person seated in the seat can rest their arm on the armrest.

In certain applications e.g. in aircraft, there is a need to keep weight and component size and number and complexity to a minimum (whilst ensuring that all safety and practical considerations are met). It is also desirable for parts such as armrests to be simple and quick to assemble.

Typically, armrests or armrest frames are formed from heavy metal materials which are milled and machined to create the desired structure. Additional structures such as cushioning, locking mechanisms etc. then need to be affixed to or incorporated into the structure using several fasteners. This all adds to the weight and cost of the armrest. There is a need for a simple, lightweight, armrest structure.

### SUMMARY

Accordingly, there is provided an armrest comprising: an internal structural frame formed of sheet metal parts bent or folded to define an outer shape of the frame and that define spaces therebetween; a shell provided over the structural frame and comprising a first shell half fitted over a first side of the structural frame and a second shell half fitted over an opposite side of the structural frame, the first and second shell halves overlapping at an inner portion where they meet; a cushion part comprising a cushion mounting frame and a cushion mounted thereon, the cushion frame mounted to the shell; and two or more fasteners each of which extends through the structural frame, the shell and the cushion mounting frame.

In embodiments, the internal structural frame comprises a lower frame part and an upper frame part. The sheet metal parts may be formed to define a main body portion and sides. The sheet metal parts may be connected together by connecting frame portions.

The shell may comprise a thermoplastic material and may have cut-out portions.

The cushion part may comprise am upper cushion part and/or a lower cushion part. The cushion may be attached to the cushion mounting frame by adhesive and/or one or more fasteners.

In an embodiment, the one or more fasteners includes a first fastener that passes through an upper part of the structural frame, through the overlapping portion of the shell parts, and through a cushion part, and/or a second fastener that passes through a lower part of the structural frame, through the overlapping portion of the shell parts, and through a cushion part and/or a third fastener that passes through a front end of the structural frame, through the overlapping portion of the shell parts, and through a cushion part.

For a pivotal armrest, there may also be provided a pivot axle around which the internal structural frame is formed.

A seat is also provided having a seat pan and a seat back and an armrest as defined above.

### BRIEF DESCRIPTION

Examples of an armrest according to the disclosure will now be described with reference to the drawings. It should be noted that these are examples only and that variations are possible within the scope of the claims.
Figures 1 is an exposed view of the internal structure of an armrest according to the disclosure.
Figure 2 is a view of an armrest such as shown in Fig. 1, also showing part of the shell.
Figure 3 is a 3D view of an assembled armrest according to the disclosure.
Figure 4 is a view of an armrest such as shown in Fig. 3 from the other side.
Figure 5 is a view of a cushion part of an armrest according to the disclosure.
Figure 6 is a view of a cushion mounting frame.
Figure 7 is a side sectional view of an armrest according to the disclosure.
Figure 8 shows an example of a fastener for use in the armrest of the disclosure.
Figure 9 shows a close up view of a rotation mechanism that may be incorporated into an armrest according to this disclosure.

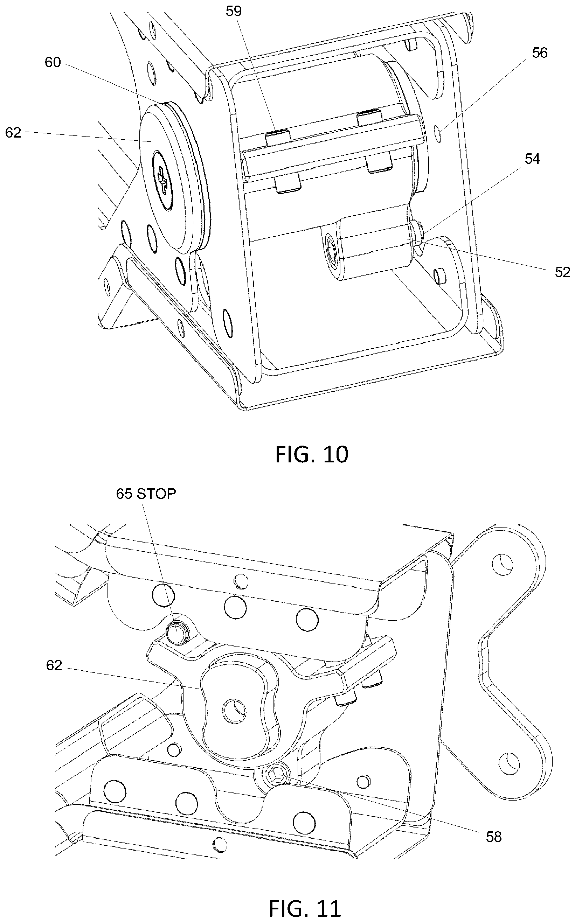

Figure 10 shows further details of a rotation mechanism that may be incorporated into an armrest according to this disclosure.
Figure 11 shows still further details of a rotation mechanism that may be incorporated into an armrest according to this disclosure.

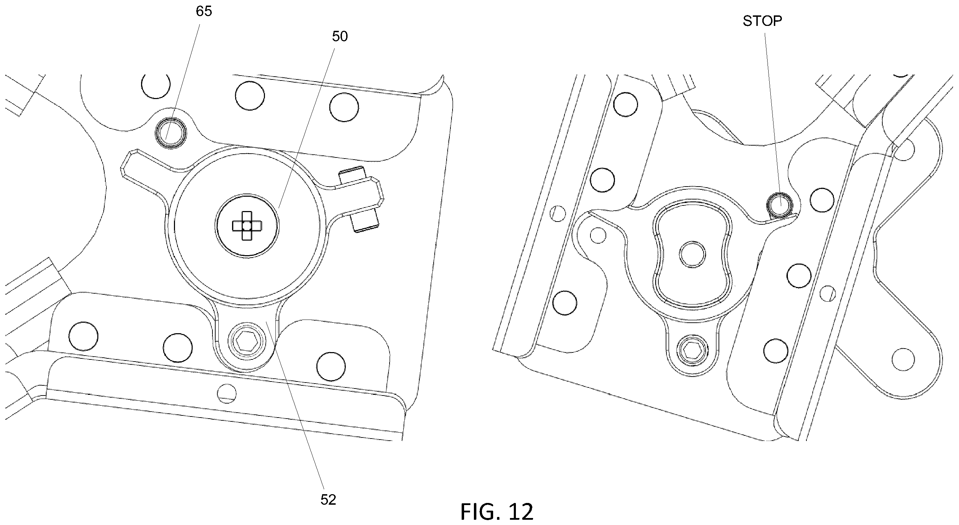

Figures 12A and 12B show a rotation mechanism that may be incorporated into an armrest according to this disclosure in, respectively, closed and open positions.
Figure 13 shows two shell halves of a shell of an armrest according to the disclosure.
Figure 14 illustrates an example of the shell and cushion parts of an armrest according to the disclosure.

### DETAILED DESCRIPTION

The armrest of this disclosure is made of three main components: a structural frame, a shell or cladding for the frame, and a cushion part; each of which can have a simple lightweight structure and which can easily be assembled together and fastened together with a minimum number of fasteners and without the need for special tools.

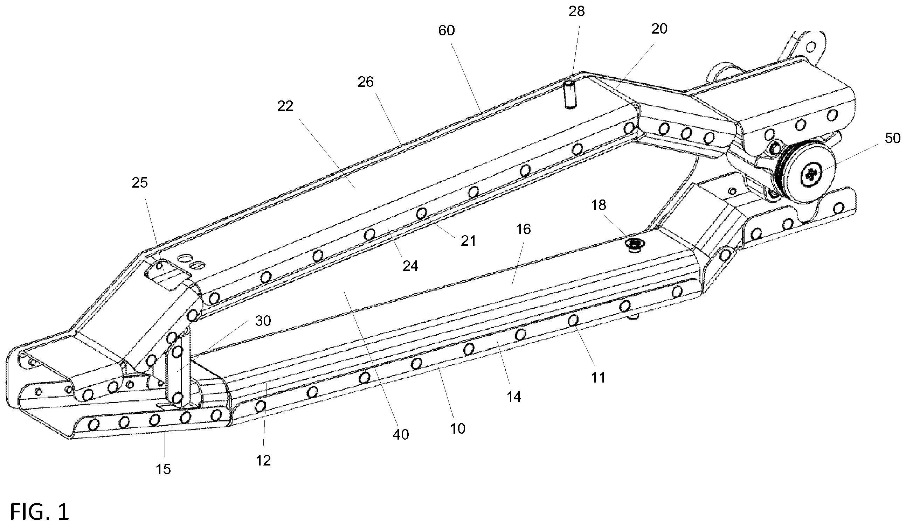

The core of the armrest is formed by an internal structural frame, an example of which is seen in Fig. 1. The structural frame is made up of sheet metal parts each bent or folded into a desired shape to form part of the frame defining the general size, shape and stiffness of the armrest. In the example shown, the structural frame comprises a lower frame part 10 and an upper frame part 20. In the example, each of the upper and lower frame parts is formed of a sheet metal part of lightweight metal e.g. aluminium, forming a main body portion 12, 22 and with the sides 14, 16; 24, 26 bent up (at an angle of e.g. substantially 90 deg.) from the main body portion. The upper and lower frame parts are connected together by connecting frame portions 30 at one or more locations between the upper and lower frame parts, to define the armrest shape. Spaces 40 are defined between the frame parts 10, 20, 30.

The frame parts 10, 20 are also provided with features or fasteners to enable attachment of the other parts of the armrest, as described further below. For example, the upper and lower frame parts may be provided with a cut-out or recess 15, 25, or a detent or the like, to receive a mating part of a cushion frame. The upper and lower frame parts may also be provided with a fastener such as a pin or rivet 18, 28 extending therethrough to attach other parts of the armrest.

If the armrest is a moveable (foldable or pivotal) armrest that can be rotated from a closed or stowed position in or adjacent the seat back to an open position for the user to rest their arm on, the upper and lower frame parts are fit around a pivot axle 50. When in the closed/stowed position, the armrest may be configured such that it forms a lateral extension of the seat backrest.

For improved strength and rigidity, a flat frame part 60 may be attached across the upper and lower frame parts 10, 20 to define the side of the armrest. The bent sides of the upper and lower frame parts may be provided with holes 11, 21 so that the side plates 60 (on one or both sides: - only one side plate 60 is shown here to simplify the drawing) can be attached thereto by rivets, pins or other fasteners.

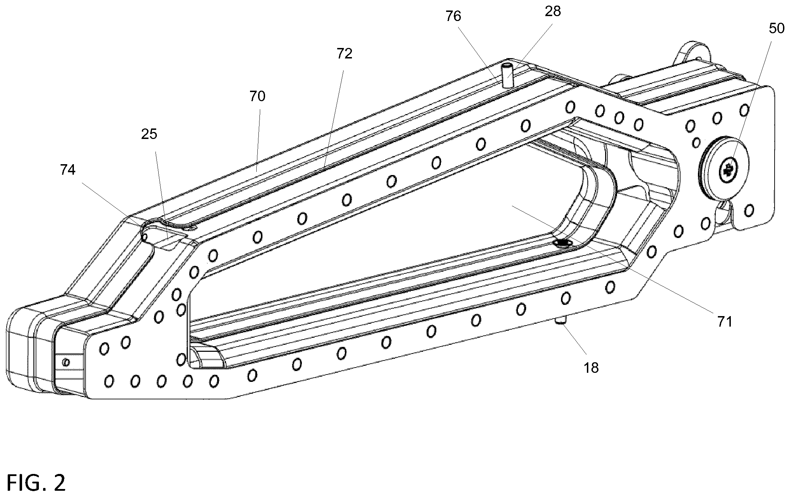

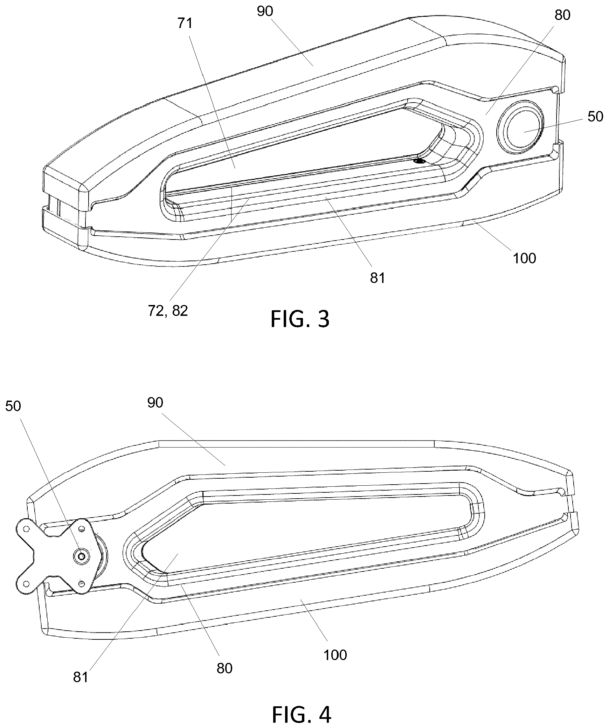

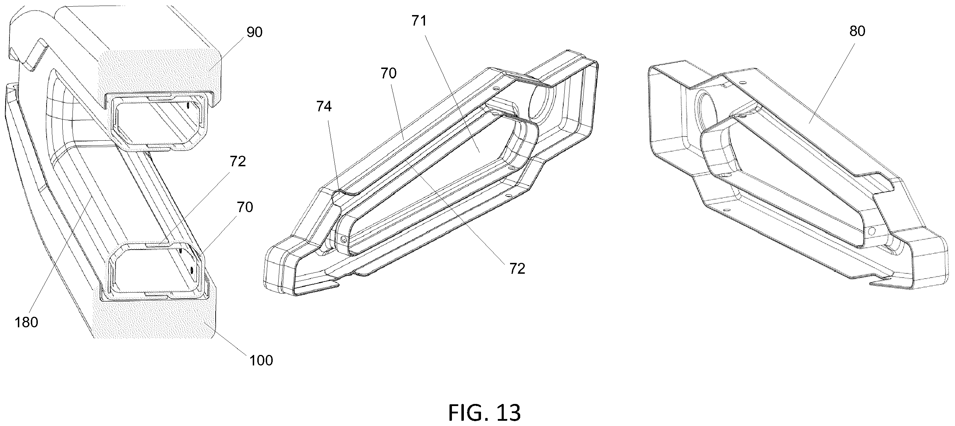

Once the internal structural frame has been formed/assembled, it is encased within a shell, described with reference to Figs. 2 to 4 and 13. The shell may be formed of two shell parts 70, 80 shaped to fit over the structural frame on respective sides of the frame, and to combine to form a shell around the structural frame.

The shell parts 70, 80 are designed to cover the metal frame parts to improve comfort and/or aesthetic appearance and to protect the frame. In the example shown, a respective shell part 70, 80 is fitted to either side of the frame, such that an inner part 72 of each shell part overlaps. The shell should be made of a strong, robust, lightweight material such as a thermoplastic material. The shell parts can form solid side surfaces on the structural frame or can be formed with one or more cut-out sections 71, 81 corresponding to a space/spaces between the structural frame parts, to reduce the overall weight of the armrest. The shell parts may also have cut-outs 74, 76 where the shell overlaps the attachments features of the structural frame.

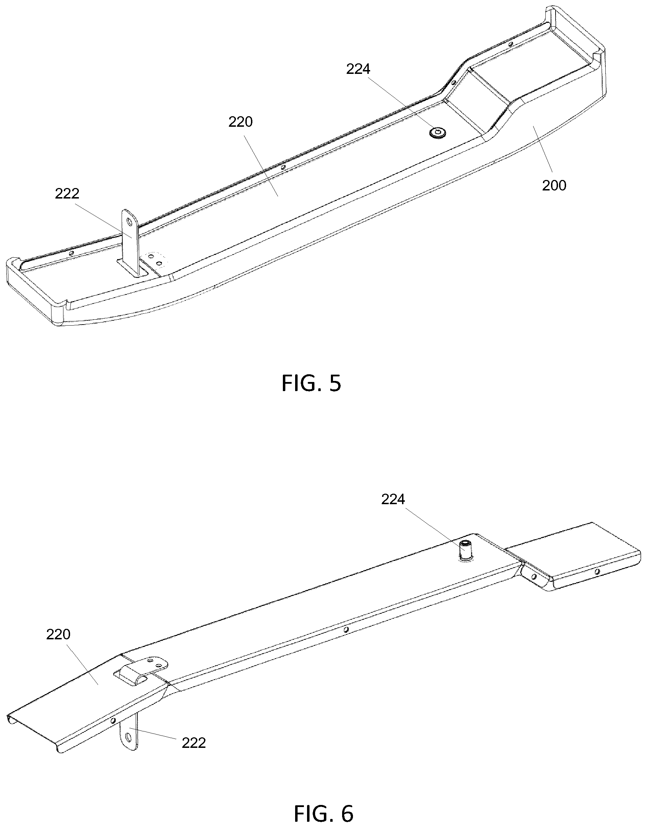

Once the internal structural frame is clad in the shell, upper, 90, and/or lower, 100, cushion parts (see Figs. 5 and 6 and 14) are mounted to the structure formed by the structural frame and the shell. In the example shown, a cushion part 90, 100 may be mounted to each of the top and the bottom of the shell-clad frame structure. This provides a comfortable surface 90 on which to rest the arm when the armrest Is in the open state and, also, for a foldable armrest, provides a cushioned surface 100 as part of the seat backrest when the armrest is closed/stowed. In other examples, including non-foldable armrests, there may be only a top cushion part 90 (or, conceivably, only a bottom cushion part 100).

An example of the structure of a cushion part is shown, from a top and bottom view, respectively in Figs. 5 and 6, and can be seen assembled in Fig. 14. In this example, the cushion part 90, 100 comprises a cushion 200 mounted to a cushion mounting frame 220 which is shaped and configured to be mounted to the top and/or bottom of the combined structural unit of the structural frame and shell described above.

A wide range of materials, known in the art, are suitable for the cushion depending on factors such as desired comfort, practicality, cost, aesthetics, etc. The cushion mounting frame 220 is made of any suitable lightweight but structurally strong and robust material such as sheet metal bent or folded into the desired shape. The cushion 200 may be attached to the mounting frame 220 by e.g. an adhesive or in other known ways and/or by a rivet 224. In the example shown, the mounting frame 220 is made of a bent metal sheet which is bent over along its edges to form sides. Reinforcement, e.g. in the form of additional metal strips, can be added to these sides to increase stiffness of the mounting frame, where required.

The mounting frame 220 is provided with attachment features such that the mounting frame and cushion 200 can be easily assembled and secured to the structural unit of the shell-clad frame. For example, the cushion mounting frame 220 may be provided with a tab 222 (for example an L-shaped connector as shown) configured to fit through the recesses 74, 25 in the shell and the structural frame and/or may have a rivet 224 extending therethrough.

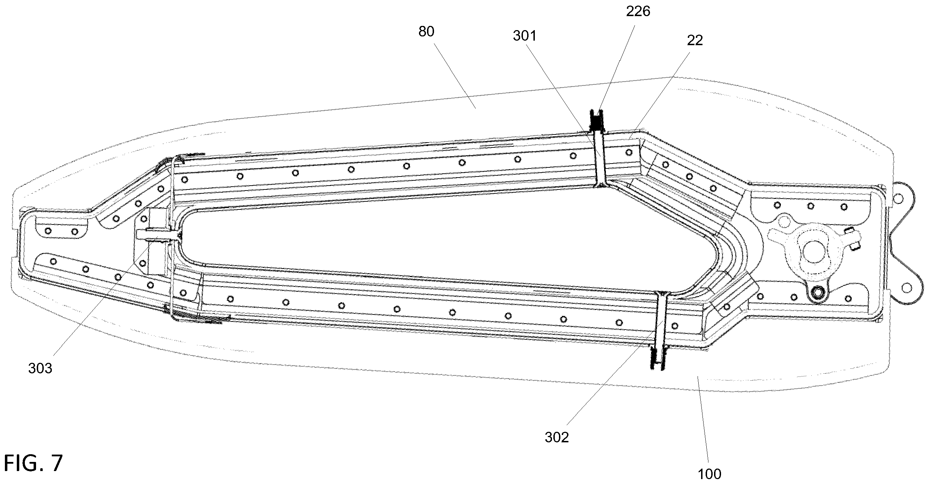

To assemble the armrest, the shell is mounted to the structural frame e.g. by attaching two shell parts 70, 80 over respective long sides of the structural frame, the shell parts overlapping where they meet. The upper and/or lower cushion parts, preassembled with the cushion 200 on the cushion mounting frame 220, are then fitted onto the resulting shell-clad structural frame, engaging the mating attachment features (e.g. the tab 222 in the recesses 74, 25). Once assembled, the parts can be secured together by a minimum number of fasteners that pass through the parts. The fasteners may be in the form of pins, screws, rivets, bolts or the like and are located at two or more points where the structural frame, shell and cushion part(s) overlap each other. In the example shown, best seen in Fig. 7, three fasteners 301, 302, 303 are used to secure all assembly parts together.

A first fastener 301 passes through an upper part of the structural frame, through the overlap 72 of the two shell parts 70, 80 and through the cushion mounting frame 220 of the upper cushion part 90. The fastener 301 may be inserted from the inside of the structural frame and may be accessed via a cut-out in the shell and the frame.

Similarly, a second fastener 302 passes through a lower part of the structural frame, through the shell parts overlap 72, and into the cushion mounting frame of the lower cushion part 100.

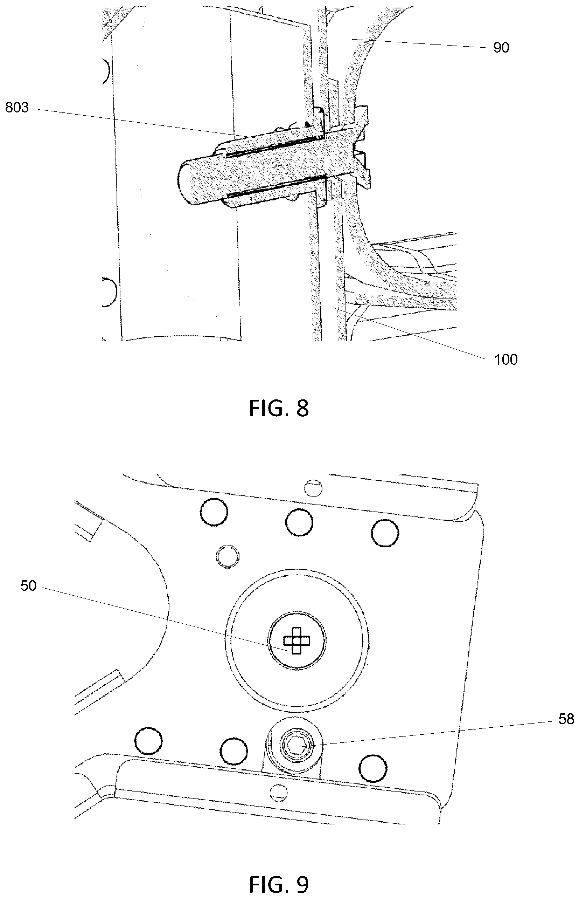

A third fastener 303, an example of which is shown in detail in Fig. 8, passes through a front end of the frame and the front of the shell where the shell parts overlap, and through holes in the front end of each of the upper and lower cushion mounting frames where they overlap at the front of the armrest. It is feasible that the assembly could be secured using only two (e.g. first and second) fasteners. Of course, more fasteners may also be used, but this would increase the overall weight of the armrest.

Thus, the armrest can be easily and quickly assembled from a small number of lightweight component parts, and easily and quickly secured using only two or three fasteners.

The concepts described above may be used for any type of armrest, including fixed position armrests and/or height-adjustable armrests. The examples shown in the drawings, though, are pivotal or foldable armrests which, when open, provide a surface on which to rest the arm while seated and, when closed, lie in or adjacent the plane of the seat backrest. The structural frame, shell and cushion part(s), in such an example, are formed around/encompass the axle 50 about which the armrest rotates. The axle 50 is fixed relative to the seat to which the armrest is, in use, assembled, and the armrest rotates about the axis A of the axle 50.

The armrest may also be provided with a locking mechanism to secure the armrest in the open and/or closed positions to prevent the armrest from rattling/moving in e.g. turbulent conditions. Various locking mechanisms are known in the art and this disclosure is not limited to any particular locking mechanism. In the example shown, the axle 50 is provided with a spring-biased pin plunger 52 and holes 54, 56 are provided in the armrest frame corresponding to the open and closed positions. When the armrest is at the respective position, the spring-biased pin 52 engages in aa respective hole 54, 56 to lock and prevent further rotation of the armrest. The pin 52 can be adjusted e.g. by an adjustment screw 58. Set screws 59 ma also be provided for adjustment of the final closed position.

The axle 50 may also be provided with a clip or bearing 60 between the axle and the armrest frame to prevent metal-to-metal contact. An end cap 62 may also be provided on the outer end of the axle 50 to secure the clip/bearing 60.

One or more stops 65 may be provided to limit rotation of the armrest about the axle 50.

## Claims

1. An armrest comprising:
an internal structural frame formed of sheet metal parts (10, 20) bent or folded to define an outer shape of the frame and that define spaces therebetween;
a shell (70, 80) provided over the structural frame and comprising a first shell half (70) fitted over a first side of the structural frame and a second shell half (80) fitted over an opposite side of the structural frame, the first and second shell halves overlapping at an inner portion (72) where they meet;
a cushion part (90,100) comprising a cushion mounting frame (220) and a cushion (200) mounted thereon, the cushion frame mounted to the shell; and
two or more fasteners (301, 302, 303) each of which extends through the structural frame, the shell and the cushion mounting frame.

2. The armrest of claim 1, wherein the internal structural frame comprises a lower frame part (10) and an upper frame part (20).

3. The armrest of claim 1 or 2, wherein the sheet metal parts (10, 20) are formed to define a main body portion (12, 22) and sides (14, 16; 24, 26).

4. The armrest of any preceding claim, wherein the sheet metal parts are connected together by connecting frame portions (30).

5. The armrest of any preceding claim, having spaces defined by components of the internal structural frame.

6. The armrest of any preceding claim, wherein the shell (70, 80) comprises a thermoplastic material.

7. The armrest of any preceding part wherein the shell (70, 80) has cut-out sections 71, 81, 74, 76)

8. The armrest of any preceding claim, the cushion part comprising am upper cushion part and/or a lower cushion part.

9. The armrest of any preceding claim, wherein the cushion (200) is attached to the cushion mounting frame (202) by adhesive and/or one or more fasteners.

10. The armrest of any preceding claim, wherein the cushion part (90, 100) and the shell and the structural frame are provided with mating engagement parts.

11. The armrest of any preceding claim, wherein the one or more fasteners comprise rivets, pins or screws.

12. The armrest of any preceding claim, wherein the structural frame part, the shell and the cushion frame parts are attached to each other by three fasteners.

13. The armrest of any preceding claim, wherein the one or more fasteners includes a first fastener (301) that passes through an upper part of the structural frame, through the overlapping portion (72) of the shell parts, and through a cushion part, and/or a second fastener (302) that passes through a lower part of the structural frame, through the overlapping portion (72) of the shell parts, and through a cushion part and/or a third fastener (303) that passes through a front end of the structural frame, through the overlapping portion (72) of the shell parts, and through a cushion part.

14. The armrest of any preceding claim, further comprising a pivot axle (50) around which the internal structural frame is formed.

15. A seat having a seat pan and a seat back and an armrest as claimed in any preceding claim.
